# DEMANDE DE BREVET EUROPEEN

(11) **EP 4 357 599 A1**
(43) Date de publication de la demande: **24.04.2024**
(21) Numéro de dépôt: 22203131.2
(22) Date de dépôt: 21.10.2022
(51) Int. Cl.: F02D 29/06, F02D 41/26

(54) **MODULE DE CONNEXION ÉLECTRIQUE POUR GROUPE ÉLECTROGÈNE ET GROUPE ÉLECTROGÈNE COMPRENANT UN TEL MODULE**

(71) Demandeur: SDMO Industries, 29490 Guipavas (FR)
(72) Inventeur: ARZEL, Alain, 29830 Ploudalmezeau (FR); GUENEGAN, Sébastien, 29860 Plabennec (FR); GOUHOURY, Francois, 29840 Landunvez (FR)
(74) Mandataire: Vidon Brevets & Stratégie

(57) **Abrégé**

L'invention concerne notamment un module (100) de connexion électrique pour groupe électrogène (1) comprenant un alternateur (11) relié à un moteur (10) thermique, formé d'au moins un sous-ensemble de cylindres (10A, 10B), ledit module (100) comprenant un boîtier (110) logeant un circuit imprimé (120) supportant :
- des bornes d'alimentation (123) électrique dudit circuit imprimé (120),
- un premier connecteur (C-Fus) d'un faisceau électrique (14) permettant, dans chaque sous-ensemble de cylindres (10A, 10B), un raccordement d'au moins un dispositif de mesure et de commande (12A, 12B) de paramètres dudit sous-ensemble de cylindres (10A, 10B) à un module de commande (13) dudit sous-ensemble de cylindres (10A, 10B),
- des deuxièmes connecteurs (F1-F18) d'organes de protection électrique dudit faisceau électrique (14), et
- un troisième connecteur (C-Diag) de diagnostic de l'état de fonctionnement de chaque module de commande (13A, 13B).

## Description

### 1. Domaine de l'invention

Le domaine de l'invention est celui des groupes électrogènes mettant en oeuvre une motorisation thermique entrainant un alternateur. L'invention concerne en particulier la connexion électrique des moyens de contrôle du moteur de tels groupes électrogènes.

### 2. Art antérieur

Un groupe électrogène est un dispositif autonome produisant, à partir d'un moteur thermique, de l'énergie électrique permettant soit de pallier une coupure du réseau électrique public, soit d'alimenter des appareils électriques dans des zones dépourvues d'accès au réseau électrique public.

Les caractéristiques de ces groupes électrogènes sont extrêmement variables, en fonction des applications et des besoins et/ou contraintes spécifiques à chaque situation, en termes de puissance électrique désirée et d'encombrement par exemple. Il existe en conséquence un large panel de groupes électrogènes. Ceux-ci sont donc généralement fabriqués en faibles séries voire au cas par cas, avec des motorisations distinctes, pour être adaptées aux besoins et aux situations. En particulier, les fabricants de groupes électrogènes peuvent proposer de nombreux types de moteurs, issues de différents constructeurs de moteurs, ce qui nécessite d'adapter au cas par cas les moyens de contrôle et la commande de ces moteurs (ECU, prise de diagnostic, fusibles...), qui sont développés au cas par cas, puis montés en un emplacement adapté sur le groupe. En conséquence, le fabricant, puis le personnel utilisant le groupe et/ou en assurant la maintenance, doivent gérer et connecter les câbles de différents faisceaux électriques de façon spécifique à chaque groupe, ce qui suppose une connaissance précise de chacun de ces groupes, un travail minutieux et complexe de connectique, généralement par vissage, et induit des risques d'erreurs de câblage ou de mauvaises connexions.

Un groupe électrogène comprend communément :
- un moteur thermique,
- un alternateur relié au moteur thermique pour pouvoir transformer l'énergie reçue du moteur thermique en énergie électrique,
- une pluralité de dispositifs électriques de mesure et de commande de paramètres du moteur thermique,
- un module de commande du moteur thermique,
- une source d'énergie pour pouvoir alimenter en électricité au moins les dispositifs électriques de mesure et de commande et le module de commande, et
- un faisceau de câbles électriques pour pouvoir raccorder ensemble les dispositifs électriques de mesure et de commande, le module de commande et la source d'énergie.

Dans le cas particulier des groupes électrogènes devant générer d'importantes puissances électriques, un moteur thermique comprenant un nombre élevé de cylindres est généralement nécessaire. Cependant, un module de commande est limité dans le nombre de cylindres commandés. Il est donc également nécessaire de mettre en oeuvre plusieurs modules de commande, chacun dédié à la gestion spécifique d'un sous-ensemble de cylindres. Dans un tel cas, le contrôle de l'ensemble est donc peu aisé, pour un opérateur qui doit gérer l'ensemble.

Il est bien sûr connu de mettre en oeuvre un boîtier à fusibles, s'interfaçant entre la source d'énergie et le faisceau de câbles électriques, afin d'assurer la protection des équipements électriques qu'il raccorde, à savoir les dispositifs de mesure et de commande et module(s) de commande notamment.

Toutefois, les boîtiers à fusibles mis en oeuvre sont généralement des dispositifs standards, issus du commerce, bien adaptés à de grandes séries mais ne satisfaisant pas à une mise en oeuvre efficace lorsque les motorisations varient au cas par cas. Et outre, ils ne sont pas adaptés aux exigences et contraintes relatives aux groupes électrogènes, telles que les vibrations, la chaleur et les projections.

Par ailleurs, de tels boîtiers à fusibles nécessitent de dénuder les extrémités des câbles du faisceau pour pouvoir les raccorder par vissage sur les bornes du boîtiers. Outre une installation complexe et fastidieuse, les vibrations du groupe électrogène lors de son fonctionnement sont susceptibles d'engendrer une désolidarisation des câbles du faisceau. Les répercussions d'une telle désolidarisation peuvent être dramatiques pour le groupe électrogène en lui-même et les personnes situées dans son environnement immédiat. Par exemple, une telle désolidarisation d'un câble peut engendrer un disfonctionnement, une panne, voire une destruction, du groupe électrogène. Les projections pouvant être émises par le groupe électrogène peuvent elles aussi endommager ces raccordements ou mettre en contact plusieurs bornes engendrant donc les risques décrits précédemment.

Par ailleurs, de telles vibrations sont également susceptibles de désolidariser le boîtier à fusibles du groupe électrogène du fait d'un montage approximatif et/ou artisanal dû à une structure générique non adaptée du boîtier. Une telle désolidarisation est également susceptible de provoquer un arrachement des câbles du faisceau, engendrant donc les risques décrits précédemment.

Il existe donc un besoin de fournir une nouvelle technique permettant de pallier tout ou partie des inconvénients des solutions connues.

Il existe ainsi un besoin de fournir une telle technique efficace et pérenne, simple de mise en oeuvre, d'installation, de maintenance et d'utilisation. Il existe également un besoin de fournir une technique compacte, limitant son encombrement sur le groupe électrogène.

Il existe en outre un besoin d'une solution simple et efficace, malgré le nombre élevé de motorisations pouvant être mise en oeuvre, de façon à éviter autant que faire se peut le développement de solution dédiée à chaque motorisation, de façon à simplifier la mise en oeuvre et l'utilisation d'un groupe électrogène.

Il existe ainsi un besoin de fournir une technique permettant de simplifier le travail du technicien ou de l'opérateur intervenant sur le groupe électrogène.

### 3. Résumé de l'invention

La technique proposée se rapporte, selon un premier aspect, à un module de connexion électrique pour groupe électrogène comprenant un alternateur relié à un moteur thermique, formé d'au moins un sous-ensemble de cylindres, de sorte à transformer l'énergie reçue dudit moteur thermique en énergie électrique, le module comprenant un boîtier à l'intérieur duquel est logé un circuit imprimé supportant :
- des bornes d'alimentation électrique du circuit imprimé,
- un premier connecteur d'un faisceau électrique permettant, dans chaque sous-ensemble de cylindres, un raccordement d'au moins un dispositif de mesure et de commande de paramètres dudit sous-ensemble de cylindres à un module de commande dudit sous-ensemble de cylindres,

- des deuxièmes connecteurs d'organes de protection électrique du faisceau électrique, et
- un troisième connecteur de diagnostic de l'état de fonctionnement de chacun des modules de commande.

Ainsi, en intégrant des composants électriques assurant différentes fonctions (protection électrique, diagnostic, etc.) pour ou un plusieurs, classiquement deux, sous-ensemble(s) de cylindres, dans un même module de connexion, structurellement adapté aux contraintes et exigences relatives au groupe électrogène associé, il est possible d'améliorer la sécurité et de réduire l'encombrement du groupe électrogène.

Selon une caractéristique particulière de la technique proposée, le premier connecteur est un connecteur d'un faisceau électrique permettant un raccordement d'au moins deux dispositifs de mesure et de commande de paramètres d'au moins deux sous-ensembles de cylindres respectivement, formant le moteur thermique, à au moins deux modules de commande des sous-ensembles de cylindres respectivement, et ledit troisième connecteur est un connecteur de diagnostic de l'état de fonctionnement de chacun desdits modules de commande.

Ainsi, un unique module selon l'invention permet de contrôler une pluralité, par exemple deux ou plus, sous-ensembles de cylindre. Il n'est pas nécessaire de dupliquer les modules pour prévoir un module par sous-ensemble.

Selon une autre caractéristique particulière de la technique proposée, le module de connexion électrique comprend en outre au moins un indicateur représentatif d'un état de fonctionnement de chaque module de commande d'un sous-ensemble.

Un tel indicateur permet notamment aux techniciens d'identifier rapidement un module de commande en panne ou défectueux. Il permet en outre d'informer les techniciens que, même si le moteur thermique est à l'arrêt, un ou des modules de commande sont toujours en fonctionnement (phases d'enregistrement des données contenues) et qu'il convient d'attendre la fin de l'enregistrement pour éteindre la source l'alimentation électrique.

Plus particulièrement, le module de connexion électrique peut comprendre une pluralité d'indicateurs, chacun représentatif d'un état de fonctionnement d'un module de commande associé à un sous-ensemble de cylindres du moteur thermique.

Un tel agencement permet notamment une surveillance plus précise l'état de fonctionnement des modules de commande et une identification rapide de celui ou ceux défectueux ou éteints.

Selon une autre caractéristique particulière de la technique proposée, le circuit imprimé supporte en outre un quatrième connecteur d'au moins un dispositif auxiliaire au moteur thermique.

La mise en oeuvre de tels quatrième connecteur permet d'améliorer la polyvalence du module de connexion électrique, en permettant à celui le raccordement électrique d'une unité d'éclairage du groupe électrogène ou d'une unité de traitement des gaz d'échappement par exemple.

Selon une caractéristique particulière de la technique proposée, le module de connexion électrique est monté sur une plaque de support solidaire du moteur thermique.

Une telle disposition permet notamment de simplifier la structure du boîtier, en s'affranchissant des variations du relief extérieur du moteur thermique selon le type de moteur utiliser. Cela se traduit donc par une simplification de fabrication et d'installation du module de connexion électrique. Cela permet également de disposer le module de connexion électrique au plus près du moteur thermique, afin de réduire la longueur du faisceau moteur par exemple.

Plus particulièrement, le boîtier peut comprendre une base, disposée contre la plaque de support, solidarisée de manière étanche, à un couvercle présentant une face commune depuis laquelle font saillie les premier et troisième connecteurs.

Un tel agencement des connecteurs permet notamment de simplifier le raccordement des connecteurs complémentaires.

Selon une autre caractéristique particulière de la technique proposée, les bornes d'alimentation font saillie du boîtier.

Un tel agencement permet notamment de simplifier le branchement des câbles provenant de la source d'alimentation sans nécessiter un démontage complet du boîtier. Un tel agencement trouve un intérêt particulier lorsque les extrémités des câbles portent des connecteurs, typiquement des cosses, revêtus d'une protection électrique.

Selon une autre caractéristique particulière de la technique proposée, le boîtier comprend une trappe amovible d'accès au moins aux deuxièmes connecteurs.

Une telle trappe permet notamment de simplifier l'accès aux deuxièmes connecteurs afin d'installer les organes de protection, ou de les remplacer, sans nécessiter un démontage complet du boîtier et/ou une désolidariser de celui-ci par rapport au moteur (ou plaque de support).

La technique proposée se rapporte, selon un deuxième aspect, à un groupe électrogène comprenant :
- un moteur thermique formé d'au moins un sous-ensemble de cylindres,
- un alternateur relié au moteur thermique de sorte à transformer l'énergie reçue du moteur thermique en énergie électrique,
- dans chaque sous-ensemble de cylindres, au moins un dispositif de mesure et de commande de paramètres du sous-ensemble de cylindres,
- dans chaque sous-ensemble de cylindres, un module de commande du sous-ensemble de cylindres,
- un faisceau électrique permettant un raccordement dudit au moins un dispositif de mesure et de commande à au moins un module de commande,
et, selon l'invention, un module de connexion électrique comprenant un boîtier à l'intérieur duquel est logé un circuit imprimé supportant :
- des bornes d'alimentation électrique du circuit imprimé,
- un premier connecteur du faisceau électrique,
- des deuxièmes connecteurs d'organes de protection électrique du faisceau électrique, et
- un troisième connecteur de diagnostic de l'état de fonctionnement de chaque module de commande.

Selon une caractéristique particulière de la technique proposée, le moteur thermique est formé d'au moins deux sous-ensemble de cylindres, et en ce que le faisceau électrique permet un raccordement d'au moins deux dispositifs de mesure et de commande de paramètres des au moins deux sous-ensembles de cylindres respectivement à au moins deux modules de commande des sous-ensembles de cylindres respectivement, et en ce que le troisième connecteur est un connecteur de diagnostic de l'état de fonctionnement de chacun des modules de commande.

### 4. Liste des Figures

La technique proposée, ainsi que les différents avantages qu'elle présente, seront plus facilement compris, à la lumière de la description qui va suivre d'un mode de réalisation illustratif et non limitatif de celle-ci, et des dessins annexés parmi lesquels :
- la figure 1 représente, de manière schématique, selon une vue de dessus, un exemple de groupe électrogène équipé d'un module de connexion électrique conforme à la technique proposée ;
- la figure 2 illustre, selon une vue partielle en perspective, un exemple structurel de module de connexion électrique, conforme à la technique proposée, monté sur un groupe électrogène ;
- la figure 3 est une vue isolée du module de connexion électrique de la figure 2 ;
- la figure 4 est une vue partiellement éclatée du module de connexion électrique de la figure 3 illustrant différents composants électroniques montés sur un circuit imprimé ; et
- la figure 5 représente, de manière schématique, le circuit électrique du module de connexion électrique de la figure 2.

### 5. Description détaillée de l'invention

### 5.1. Principe général

Au prix d'une démarche innovante et de développements non évidents de boîtiers à fusibles, les inventeurs de la présente technique ont déterminé que, contrairement aux *a priori* de l'homme du métier qui déporterait le boîtier à fusible du moteur thermique, pour s'affranchir des contraintes associées aux diversités structurelles, il est préférable de développer un module universel de connexion électrique multifonction intégrant, dans un boîtier unique et universel, résistant aux contraintes en question, des moyens techniques distincts assurant plusieurs fonctions.

Fort de cette constatation, les inventeurs ont déterminé qu'il était particulièrement pertinent de rassembler *a minima* dans un tel module universel les fonctions de protection électrique des dispositifs de mesure et de commande de paramètres du moteur thermique et de diagnostic du ou des modules de commande.

Le principe général de l'invention consiste donc en un regroupement optimisé et universel (c'est-à-dire non spécifique à un moteur particulier) dans un module de connexion électrique pour groupe électrogène à moteur thermique.

Selon l'invention, un tel module comprend un boîtier à l'intérieur duquel est logé un circuit imprimé supportant :
- des bornes d'alimentation électrique du circuit imprimé,
- un premier connecteur d'un faisceau électrique de raccordement de dispositifs de mesure et de commande de paramètres à un ou plusieurs module(s) de commande associé(s) au moteur thermique, ce premier connecteur communiquant avec le, ou sélectivement avec chacun des, module(s) de commande, via des câbles dédiés du faisceau électrique ou via un bus reliant ces modules de commande,
- des deuxièmes connecteurs d'organes de protection électrique du faisceau électrique (fusibles), et
- un troisième connecteur de diagnostic de l'état de fonctionnement desdits modules de commande.

Ainsi, en intégrant des composants électriques assurant différentes fonctions (protection électrique, diagnostic, etc.) dans un même module de connexion, structurellement adapté aux contraintes et exigences relatives au groupe électrogène associé, il est possible d'améliorer la sécurité et de réduire l'encombrement du groupe électrogène.

Cette approche permet de développer un unique boîtier regroupant de façon simple et organisée les fusibles (une trappe peut être prévue pour un accès direct à ceux-ci) et au connecteur de contrôle / commande d'une part et au connecteur de diagnostic d'autre part d'au moins un, efficacement deux (voire plus) pour les groupes électrogènes devant générer d'importantes puissances électriques, sous-ensemble(s) de cylindres via des connecteurs uniques.

Il est ainsi possible de disposer, à coût réduit, d'un boîtier unique, qui peut être sécurisé efficacement notamment contre l'humidité, la poussière et les vibrations. L'ensemble des connexions peut se faire par enfichage, sans nécessiter de dénudage et de vissage de câbles.

Le montage du boîtier sur différents groupes électrogènes peut également être optimisé du fait de son caractère unique.

En outre, un tel boîtier est adapté à tout type de moteur thermique (quelle que soit l'ECU notamment), et permet de gérer via un boîtier deux (voire plus) modules de commande associés à un unique moteur thermique. Il est bien sûr possible d'utiliser le boîtier avec un seul module de commande, lorsque ceci est possible, ce qui offre une universalité de mise en oeuvre, sans nécessité de développement ou d'adaptation d'un boîtier à chaque configuration de motorisation.

En d'autres termes, un même module de connexion électrique, conforme à la technique proposée, peut aussi bien être mis en oeuvre sur un « gros groupe électrogène », équipé d'une pluralité d'ECU associés chacun un sous-ensemble de cylindres (dix cylindres, par exemple) du moteur thermique (comprenant globalement vingt cylindres, par exemple), que sur un « petit groupe électrogène », équipé d'un unique ECU associé à l'ensemble des cylindres du moteur thermique. Dans une telle situation, par abus de langage, il est considéré que le moteur thermique comprend un unique sous-ensemble de cylindres.

La technique proposée se rapporte, selon un deuxième aspect, à un groupe électrogène équipé d'un tel module de connexion électrique.

### 5.2. Description d'un mode de réalisation

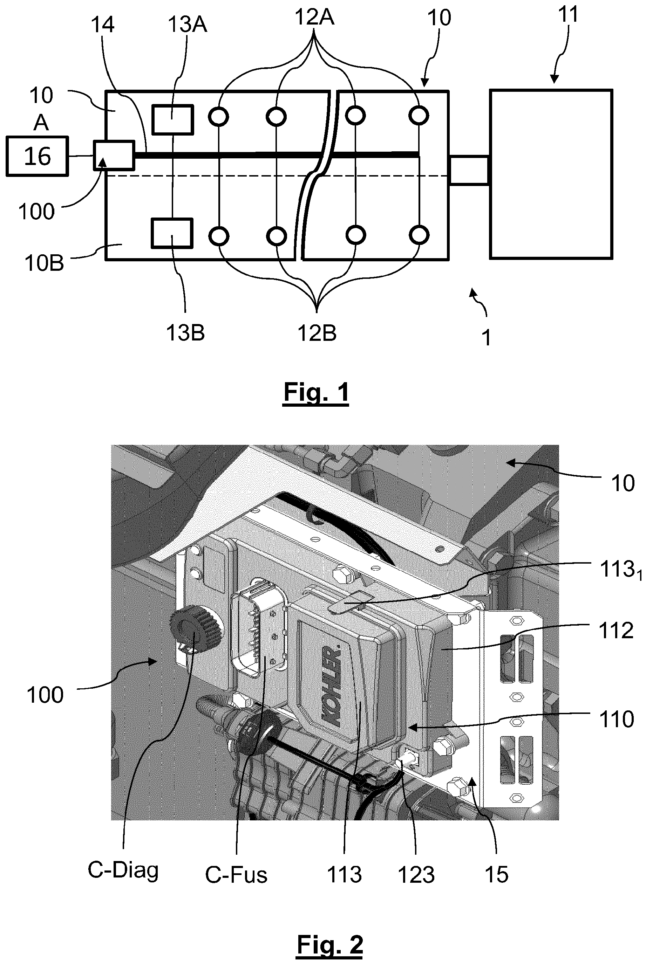

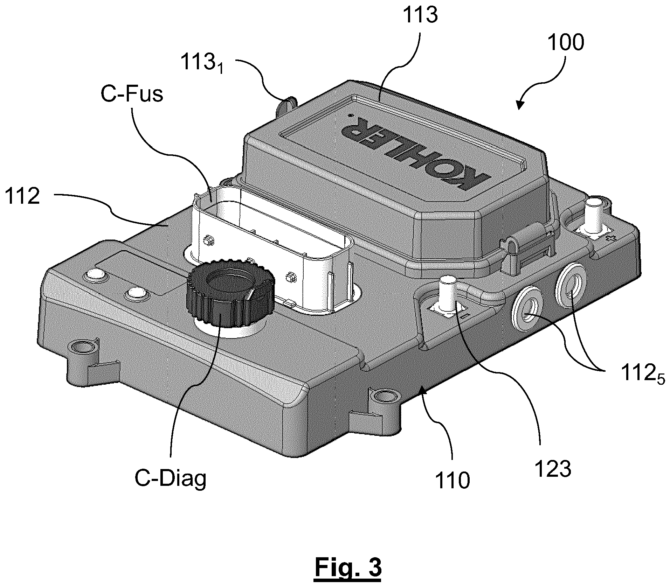

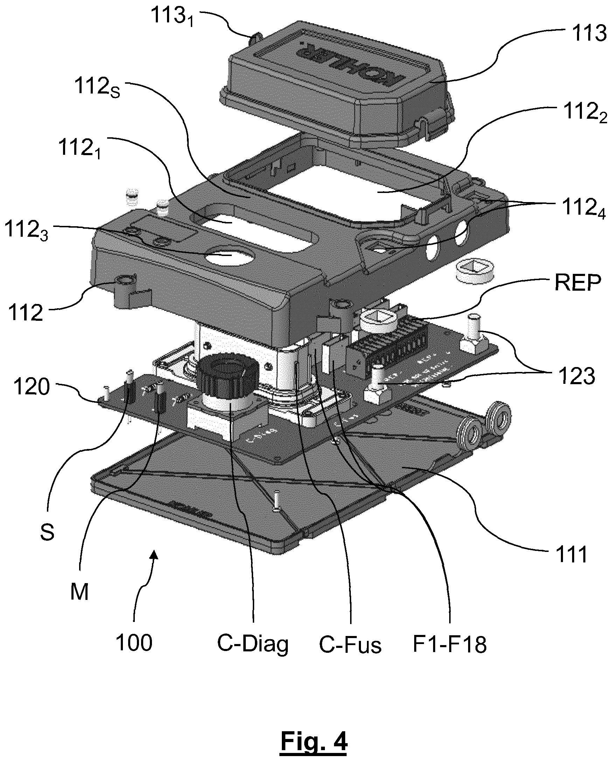

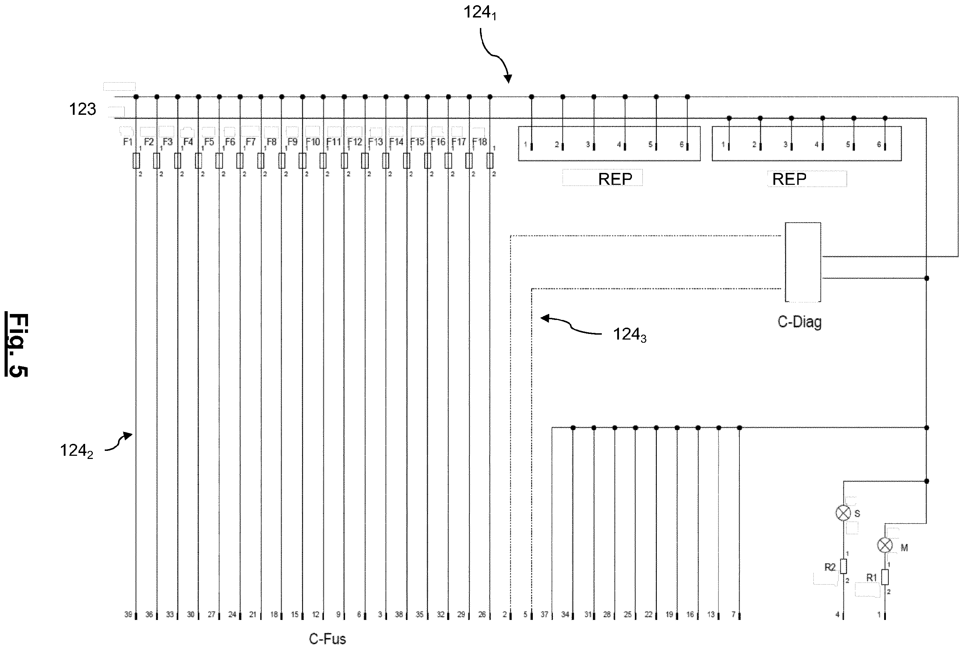

On illustre par la suite un mode de réalisation de la technique proposée, traité à titre de simple exemple illustratif, et non limitatif, à l'appui des figures 1 à 5 faisant référence à un groupe électrogène dont le moteur thermique comprend deux sous-ensembles de cylindres, gérés chacun par un module de commande.

Néanmoins, comme il en ressortira clairement par la suite, la technique proposée n'est pas limitée à cette mise en oeuvre et peut, sans modification du boîtier ni adaptation des connecteurs, être mis en oeuvre avec un moteur comprenant un nombre suffisamment limité de cylindres pour pouvoir être gérés par un unique module de commande.

Par la suite, de mêmes éléments ont été désignés par de mêmes références sur les différentes figures. Sur les figures, les échelles et les proportions ne sont pas strictement respectées et ce, à des fins d'illustration et de clarté.

La figure 1 représente, de manière schématique, un groupe électrogène équipé d'un module de connexion électrique, conforme à la technique proposée, dont un exemple de réalisation illustré sur les figures 2 à 5.

Tel que représenté de manière schématique sur la figure 1, un groupe électrogène 1 comprend un bâti (non représenté) supportant un moteur 10 thermique, comprenant une pluralité de cylindres, vingt dans l'exemple illustré, relié à un alternateur 11 pour pouvoir transformer l'énergie reçue du moteur 10 thermique en énergie électrique.

Ce moteur 10 thermique peut être de tous types. Il peut notamment s'agir d'un moteur à cycle Otto, cycle Diesel, cycle de Rankine, cycle de Brayton, et de manière générale tous types de moteurs thermiques.

Le groupe électrogène 1 comprend par ailleurs une pluralité de dispositifs 12A, 12B électriques de mesure et de commande de paramètres du moteur 10 thermique.

Ces dispositifs de mesure sont par exemple des capteurs de pression d'huile, de température du liquide de refroidissement et de position de vilebrequin. Les dispositifs de commande sont par exemple des solénoïdes de distribution et d'injection.

Le groupe électrogène 1 comprend en outre au moins un module de commande 13A, 13B du moteur 10 thermique. Un tel module de commande 13A, 13B, typiquement un calculateur, également désigné « ECU » en terminologie anglo-saxonne, permet d'optimiser les performances du moteur 10 thermique, et donc du groupe électrogène 1. Le module de commande 13A, 13B comprend pour ce faire un algorithme décisionnel optimisant, en temps réel, le fonctionnement des dispositifs de commande en fonction des informations collectées des dispositifs de mesure.

En pratique, un module de commande (ECU) 13A, 13B peut gérer un nombre limité de cylindres, par exemple dix. Il est pourtant souvent nécessaire, pour un groupe électrogène, de disposer d'une forte puissance, et donc de mettre en oeuvre un nombre élevé de cylindres, allant au-delà des capacités de gestion d'un unique module de commande. Dans une telle situation, correspondant à l'exemple illustré, le moteur 10 thermique comprend un ensemble de vingt cylindres organisés en deux sous-ensembles de dix cylindres, typiquement en deux rangées de dix cylindres. Ainsi, chacun sous-ensemble de cylindres est commandé par un module de commande 13A, 13B. Dans ce cas, deux ECU sont donc nécessaires, pour gérer indépendamment chacun des sous-ensembles de cylindres.

Préférentiellement, comme dans l'exemple illustré, un protocole de communication de type Maître-esclave (« *Master-Slave* » en terminologie anglo-saxonne) relie les deux modules de commande 13A, 13B, afin d'assurer une gestion efficace et sûre du moteur 10 thermique dans son ensemble.

Le groupe électrogène 1 comprend également une source d'énergie 16, typiquement une batterie, pour pouvoir alimenter en électricité les dispositifs 12A, 12B de mesure et de commande et les modules de commande 13A, 13B.

Est également prévu un faisceau 14 de câbles électriques, également appelé faisceau moteur, connectant différents éléments électriques, à savoir les dispositifs de mesure et de commande et les modules de commande notamment, à chacun des sous-ensembles de cylindres.

De la même façon, un connecteur de diagnostic permet de contrôler les deux sous-ensembles de cylindres, via une unique connexion.

Le groupe électrogène 1 comprend en outre un module 100 de connexion électrique, s'interfaçant entre la source d'énergie 16 et le faisceau 14, nécessitant un jeu de fusibles pour protéger l'ensemble, en cas de défaillance de l'un des éléments.

Le module 100 de connexion électrique comprend donc à cet effet des bornes d'alimentation en énergie électrique.

Selon l'invention, le module 100 de connexion électrique, davantage visible sur les **figures 2** à **5****,** comprenant un boîtier 110 à l'intérieur duquel est logé un circuit imprimé 120 supportant :
- un premier connecteur C-Fus du faisceau 14 moteur,
- des deuxièmes connecteurs F1-F18 d'organes de protection électrique du faisceau 14 moteur, et
- un troisième connecteur C-Diag de diagnostic de l'état de fonctionnement des deux modules de commande 13A, 13B.

Ainsi, le module 100 de connexion électrique conforme à la technique proposée permet de centraliser dans un même boîtier, structurellement adapté aux contraintes et exigences des groupes électrogènes, plusieurs fonctions essentielles au fonctionnement et à la maintenance du groupe électrogène auquel il est associé.

Le boîtier 110 comprend une base 111, configurée pour être disposée contre une plaque de support 15 solidaire du moteur 10 thermique, un couvercle 102, ou capot, solidarisé de manière étanche à la base 111. Ainsi, lorsque le module 100 de connexion électrique est assemblé, le circuit imprimé 120 est maintenu entre la base 111 et le couvercle 12.

Le couvercle 112 du boîtier comprend un premier orifice 112₁ de passage du premier connecteur C-Fus de manière à lui permettre de faire saillie du boîtier 110 en vue de son raccordement au faisceau 14 moteur.

Le couvercle 112 du boîtier comprend un deuxième orifice 112₂ ménagé en regard des deuxièmes connecteurs F1-F18 en vue de permettre l'installation de organes de protection dans ceux-ci.

Le couvercle 112 du boîtier comprend en outre un troisième orifice 112₃ de passage du troisième connecteur C-Diag de manière à lui permettre de faire saillie du boîtier 110 en vue de son raccordement à un outil de diagnostic (non représenté) pouvant communiquer avec les deux sous-ensembles de cylindres.

Les premier, deuxième et troisième orifices 112₁, 112₂, 112₃ sont ménagés sur une face 112ₛ commune du couvercle 112 de manière à simplifier les branchements des premier et troisième connecteurs C-Fus, C-Diag et des organes de protection.

Le boîtier 110 comprend par ailleurs une trappe 113 amovible d'accès aux deuxièmes connecteurs F1-F18 afin de simplifier l'installation des organes de protection électrique et le remplacement de ceux défaillant. La trappe 113 amovible obture donc de manière sélective le deuxième orifice 112₂ du couvercle 112.

Le boîtier 110 comprend en outre des quatrièmes orifices 112₄ de passage des bornes d'alimentation 123 en énergie électrique du circuit imprimé 120.

Le premier connecteur C-Fus, comprenant une pluralité de broches, est adapté pour coopérer avec un connecteur complémentaire du faisceau 14 moteur. Ainsi, la connectique est rapide et sécurisée.

Le troisième connecteur C-Diag est relié de manière fonctionnelle, par des pistes électriques, aux deux modules de commande 13A, 13B de sorte à centraliser la récupération en vue de l'opération de diagnostic. Pour ce faire, le deuxième connecteur C-Diag est relié aux modules de commande 13A, 13B par l'intermédiaire d'un bus CAN (« Controller Area Network » en terminologie anglo-saxonne) intégré au faisceau 14 moteur. L'identification du module de commande défaillant et de la défaillance en elle-même est réalisé ultérieurement par l'outil de diagnostic.

Selon le mode de réalisation des figures, le module 100 de connexion électrique comprend en outre deux indicateurs M, S, typiquement des diodes lumineuses, représentatifs de l'état de fonctionnement des modules de commande 13A, 13B « Maître-Esclave » respectivement.

De tels indicateurs M, S indiquent l'état d'alimentation électrique des modules de commande 13A, 13B. Cela permet d'informer les techniciens lors de l'arrêt du groupe électrogène, pour maintenance, s'il peut ouvrir les circuit 24V qui coupera l'alimentation des modules de commandes. (Ouverture du circuit 24V à l'extinction des diodes). Cela permet également d'informer les techniciens que, même si le moteur thermique est à l'arrêt, un ou des modules de commande sont toujours en fonctionnement (phases d'enregistrement des données contenues) et qu'il convient d'attendre la fin de l'enregistrement pour éteindre la source l'alimentation électrique.

Selon le mode de réalisation des figures, le module 100 de connexion électrique comprend par ailleurs des quatrièmes connecteurs REP de dispositifs auxiliaires au groupe électrogène, tels des dispositifs d'éclairage et/ou de traitement des gaz d'échappement du moteur thermique par exemple. Le boîtier 110 présente donc des cinquième orifices 112₅ de passage de câbles des dispositifs auxiliaires aux quatrièmes connecteurs REP.

En outre, afin d'assurer le fonctionnement du module 100 de connexion électrique, le circuit imprimé 120 comprend notamment :
- des premières pistes électriques 124₁ reliant les bornes d'alimentation 123 à des premières broches du premier connecteur C-Fus, aux deuxièmes connecteurs F1-F18, au troisième connecteur C-Diag et, si présents, aux indicateurs M, S et aux quatrièmes connecteurs REP,
- des deuxièmes pistes électriques 124₂ reliant les deuxièmes connecteurs F1-F18 à des deuxièmes broches du premier connecteur C-Fus, et
- des troisièmes pistes électriques 124₃ reliant le troisième connecteur C-Diag à des troisièmes broches du premier connecteur C-Fus, destinées à être reliées au bus CAN.

Dans l'exemple illustré, le module 100 de connexion électrique est solidarisé à la plaque de support 15 par des vis traversant des lumières ménagées dans le couvercle 112 du boîtier 110.

Le boîtier 110, sensiblement de forme parallélépipédique, est ici réalisé en un polyamide chargé en fibres de verre. Bien évidemment, tout autre matériau, plastique de préférence, présentant une résistance aux températures élevées, à la poussière et aux protections fluidique peut être envisagé.

Les premier, deuxième et troisième orifices 112₁, 112₂, 112₃ sont ménagés sur la face 112ₛ supérieur du couvercle 112, c'est-à-dire sur la face opposée à la base 111 du boîtier. Le raccordement des connecteurs est ainsi plus aisé pour le technicien qui est positionné en face du module 100 de connexion électrique.

Dans l'exemple illustré, la trappe 113 porte un mécanisme de verrouillage, par un mécanisme d'encliquetage réversible, au couvercle 112 afin d'assurer leur assemblage. Tout autre moyen de verrouillage peut être alternativement envisagé dès lors qu'il permettant de maintenir la trappe 113 de manière étanche contre le couvercle 112.

Le module 100 de connexion électrique comprend dix-huit deuxièmes connecteurs F1-F18 de fusibles. Bien évidemment, le nombre de deuxièmes connecteurs F1-F18 peut être adapté notamment en fonction du nombre de dispositifs 12A, 12B électriques de mesure et de commande devant être alimentés en énergie électrique.

### 5.3. Autres aspects et variantes

Dans le mode de réalisation décrit précédemment, le moteur thermique comprend deux sous-ensembles de cylindre chacun associé à un module de commande respectivement. Le module de connexion électrique comprend donc deux indicateurs distincts afin de vérifier de manière indépendante l'état de fonctionnement des deux modules de commande. Toutefois, pour limiter les coûts de fabrication et réduite l'encombrement du module, il peut être envisagé de mettre en oeuvre un unique indicateur commun.

Dans un autre mode de réalisation, non illustré, le moteur thermique comprend un nombre suffisamment limité de cylindres (définissant par abus de langage un unique sous-ensemble) et donc un unique module de commande de celui-ci. Dans une telle configuration, un seul indicateur est utilisé. De manière alternative, le boîtier du module de connexion est formé de sorte à recouvrir le deuxième indicateur non utilisé. Cela permet de simplifier la production du module, notamment en conservant un circuit électronique commun.

Dans un autre mode de réalisation non illustré, le boîtier est dépourvu de trappe d'accès afin de notamment simplifier la conception du module de connexion électrique et/ou d'optimiser l'étanchéité de celui-ci. Dans ce mode de réalisation, l'accès à l'intérieur du boîtier se fait donc en ouvrant ou extrayant le couvercle de la base.

Dans un autre mode de réalisation non illustré, le module de connexion électrique est dépourvu du quatrième connecteur destiné au raccordement des dispositifs auxiliaires au groupe électrogène. L'usage de tels dispositifs auxiliaires étant peu répandu pour les groupes électrogènes de petites puissances, s'affranchir d'un tel connecteur permet notamment de limiter les coûts de fabrication et de réduire l'encombrement du module.

Il apparaît donc clairement que la technique proposée n'est pas limitée aux modes de réalisation décrits précédemment et fournis uniquement à titre d'exemples. Elle englobe diverses modifications, formes alternatives et autres variantes que pourra envisager l'homme du métier dans le cadre de la présente invention et notamment toutes combinaisons des différents modes de réalisation décrits précédemment, pouvant être pris séparément ou en association.

Selon différents aspects, la technique proposée présente donc tout ou partie des avantages suivants, en fonction des modes de réalisation ou variantes retenus :
- améliorer l'intégration des composants dans le module de connexion électrique ;
- proposer un module de connexion électrique polyvalent ;
- simplifier l'installation du module de connexion électrique ;
- réduire l'encombrement du module de connexion électrique ;
- assurer la pérennité et/ou robustesse du module de connexion électrique polyvalent ;
- assurer la sécurité du groupe électrogène ;
- garantir le fonctionnement du groupe électrogène ;
- assurer la sécurité des personnes présentes dans l'environnement électrogène ;
- simplifier la maintenance du groupe électrogène ;
- simplifier la structure du groupe électrogène
- etc.

## Revendications

1. Module (100) de connexion électrique pour groupe électrogène (1) comprenant un alternateur (11) relié à un moteur (10) thermique, formé d'au moins un sous-ensemble de cylindres (10A, 10B), de sorte à transformer l'énergie reçue dudit moteur (10) thermique en énergie électrique, ledit module (100) comprenant un boîtier (110) à l'intérieur duquel est logé un circuit imprimé (120) supportant :
- des bornes d'alimentation (123) électrique dudit circuit imprimé (120),
- un premier connecteur (C-Fus) d'un faisceau électrique (14) permettant, dans chaque sous-ensemble de cylindres (10A, 10B), un raccordement d'au moins un dispositif de mesure et de commande (12A, 12B) de paramètres dudit sous-ensemble de cylindres (10A, 10B) à un module de commande (13) dudit sous-ensemble de cylindres (10A, 10B),
- des deuxièmes connecteurs (F1-F18) d'organes de protection électrique dudit faisceau électrique (14), et
- un troisième connecteur (C-Diag) de diagnostic de l'état de fonctionnement de chaque module de commande (13A, 13B).

2. Module (100) de connexion électrique selon la revendication 1, **caractérisé en ce que** ledit premier connecteur (C-Fus) est un connecteur d'un faisceau électrique (14) permettant un raccordement d'au moins deux dispositifs de mesure et de commande (12A, 12B) de paramètres d'au moins deux sous-ensembles de cylindres (10A, 10B) respectivement, formant ledit moteur (10) thermique, à au moins deux modules de commande (13) desdits sous-ensembles de cylindres (10A, 10B) respectivement, et **en ce que** ledit troisième connecteur (C-Diag) est un connecteur de diagnostic de l'état de fonctionnement de chacun desdits modules de commande (13A, 13B).

3. Module (100) de connexion électrique selon la revendication 1, **caractérisé en ce qu'**il comprend en outre au moins un indicateur (M, S) représentatif d'un état de fonctionnement de chaque module de commande (13A, 13B).

4. Module (100) de connexion électrique selon la revendication 3, **caractérisé en ce qu'**il comprend une pluralité d'indicateurs (S, M), chacun représentatif d'un état de fonctionnement d'un module de commande (13A, 13B) associé à un sous-ensemble de cylindres (10A, 10B) dudit moteur (10) thermique.

5. Module (100) de connexion électrique selon la revendication 1, **caractérisé en ce que** ledit circuit imprimé (120) supporte en outre un quatrième connecteur (REP) d'au moins un dispositif auxiliaire audit moteur (10) thermique.

6. Module (100) de connexion électrique selon la revendication 1, **caractérisé en ce qu'**il est monté sur une plaque de support (15) solidaire dudit moteur (10) thermique.

7. Module (100) de connexion électrique selon la revendication 6, **caractérisé en ce que** ledit boîtier (110) comprend une base (111), disposée contre ladite plaque de support (15), solidarisée de manière étanche, à un couvercle (112) présentant une face (112s) commune depuis laquelle font saillie lesdits premier et troisième connecteurs.

8. Module (100) de connexion électrique selon la revendication 1, **caractérisé en ce que** lesdites bornes d'alimentation (123) font saillie dudit boîtier (110).

9. Module (100) de connexion électrique selon la revendication 1, **caractérisé en ce que** ledit boîtier (110) comprend une trappe (113) amovible d'accès au moins auxdits deuxièmes connecteurs (F1-F18).

10. Groupe électrogène (1) comprenant :
- un moteur (10) thermique formé d'au moins un sous-ensemble de cylindres (10A, 10B),
- un alternateur (11) relié audit moteur (10) thermique de sorte à transformer l'énergie reçue dudit moteur (10) thermique en énergie électrique,
- dans chaque sous-ensemble de cylindres (10A, 10B), au moins un dispositif de mesure et de commande (12A, 12B) de paramètres dudit sous-ensemble de cylindres (10A, 10B),
- dans chaque sous-ensemble de cylindres (10A, 10B), un module de commande (13A, 13B) dudit sous-ensemble de cylindres (10A, 10B),
- un faisceau électrique (14) permettant un raccordement dudit au moins un dispositif de mesure et de commande (12A, 12B) à au moins un module de commande (13A, 13B), **caractérisé en ce qu'**il comprend en outre un module (100) de connexion électrique comprenant un boîtier (110) à l'intérieur duquel est logé un circuit imprimé (120) supportant :
- des bornes d'alimentation (123) électrique dudit circuit imprimé (120),
- un premier connecteur (C-Fus) dudit faisceau électrique (14),
- des deuxièmes connecteurs (F1-F18) d'organes de protection électrique dudit faisceau électrique (14), et
- un troisième connecteur (C-Diag) de diagnostic de l'état de fonctionnement de chaque module de commande (13A, 13B).

11. Groupe électrogène (1) selon la revendication 10, **caractérisé en ce que** ledit moteur (10) thermique est formé d'au moins deux sous-ensemble de cylindres (10A, 10B), et **en ce que** ledit faisceau électrique (14) permet un raccordement d'au moins deux dispositifs de mesure et de commande (12A, 12B) de paramètres desdits au moins deux sous-ensembles de cylindres (10A, 10B) respectivement à au moins deux modules de commande (13) desdits sous-ensembles de cylindres (10A, 10B) respectivement, et **en ce que** ledit troisième connecteur (C-Diag) est un connecteur de diagnostic de l'état de fonctionnement de chacun desdits modules de commande (13A, 13B).
